# EUROPEAN PATENT SPECIFICATION

(11) **EP 1 492 706 B1**
(45) Date of publication and mention of the grant of the patent: **31.08.2005**
(21) Application number: 03745477.4
(22) Date of filing: 26.03.2003
(51) Int. Cl.: B64G 1/64, B64G 5/00

(54) **SPACECRAFT, METHOD FOR BUILDING SUCH A SPACECRAFT, AND ADAPTOR TO BE USED IN SUCH A SPACECRAFT**
RAUMFAHRZEUG, VERFAHREN ZUM BAU SOLCH EINES RAUMFAHRZEUGS UND BEI EINEM SOLCHEN RAUMFAHRZEUG ZU VERWENDENDER ADAPTER
VEHICULE SPATIAL, PROCEDE DE FABRICATION ASSOCIE, ET ADAPTATEUR A UTILISER DANS LEDIT VEHICULE SPATIAL

(30) Priority: 28.03.2002 NL 1020271
(43) Date of publication of application: 05.01.2005
(73) Proprietor: Dutch Space B.V., 2333 CP Leiden (NL)
(72) Inventor: CRUIJSSEN, Johan, Hendrik, NL-2406 JM Alphen aan den Rijn (NL); NUGTEREN, Paul, Robert, NL-2353 DN Leiderdorp (NL); SCHOLTEN, Johannes, Reinoldus, Maria, NL-1183 AX Amstelveen (NL)
(74) Representative: Van Breda, Jacobus
(86) International application number: PCT/NL2003/000230
(87) International publication number: WO 2003/082674

(56) References cited:
- EP-A- 0 665 162
- EP-A- 1 038 772
- SE-B- 454 082
- SE-C- 515 850
- US-A- 5 816 539
- US-A- 5 850 989
- US-A1- 2001 028 020
- WILKE P S ET AL: "WHOLE-SPACECRAFT PASSIVE LAUNCH ISOLATION" JOURNAL OF SPACECRAFT AND ROCKETS, AMERICAN INSTITUTE OF AERONAUTICS AND ASTRONAUTICS. NEW YORK, US, vol. 35, no. 5, 1 September 1998 (1998-09-01), pages 690-694, XP000781522 ISSN: 0022-4650
- LECHON J F: "CASA EXPERIENCE ON THE QUALIFICATION FLIGHTS OF ARIANE-5 LAUNCHER" REACHING FOR THE SKIES, ESA, NL, no. 19, April 1999 (1999-04), pages 4-6, XP000828739 ISSN: 1013-9044

## Description

The invention relates to a method of assembling a spacecraft, comprising a carrier rocket and at least a first payload, such as a satellite or the like, wherein the first payload is placed on the carrier rocket employing an adapter between the carrier rocket and the first payload.

The invention also relates to an adapter for a spacecraft, comprising a first part and a second part, the first part being designed for coupling with a first payload, and the second part being designed for coupling with a carrier rocket. Such an adapter is known, for example, from the Swedish patent SE-C-515 850.

Wilke P.S. et al.: *Whole-spacecraft passive launch isolation,* Journal of Spacecraft and Rockets, American Institute of Aeronautics and Astronautics. New York, US, vol. 35, no. 5, 1 September 1998 (1998-09-01), pages 690-694, XP000781522 ISSN: 0022-4650 shows an adapter for a spacecraft, comprising a first part and a second part, wherein in the ready state, the first part of the adapter and the second part of the adapter are permanently connected.

The adapter known from SE-C-515 850 is comprised of two parts, such that the first part is separably coupled with a payload in the form of a satellite, while the second part is inseparably coupled with the carrier rocket. The first part and the second part are separably coupled with each other such that in space the carrier rocket with the second part of the adapter can be uncoupled from the first part of the adapter. Subsequently, this first part can independently carry out a further flight, allowing it to function as so-called "free flying satellite", given that the necessary facilities are provided.

A problem with the known system is that the secondary load to be accommodated by the adapter has to be relatively small, since the space in the first part of the adapter is very limited. This can not be solved by embodying the first part of the adapter larger and consequently heavier, because the stress on the coupling between the satellite and the first part of the adapter causes constructional problems during the assembly of the spacecraft. It is an object of the invention to find a solution for this problem and to provide a method allowing the ready spacecraft to be embodied with a second payload in addition to the first payload, permitting the second payload to be larger and heavier than with the apparatus known from SE-C-515 850.

To this end there is first proposed a method for the assembly of a spacecraft, characterised in that a two-part adapter is used, wherein a first relatively light part of the adapter is mounted under the first payload, and a second relatively heavy part of the adapter is placed on the carrier rocket, after which the first part of the adapter together with the first payload is placed on the second part of the adapter and the first part of the adapter is secured in a permanent connection on the second part of the adapter so as to bring the same into the completed form. With this the necessary mechanical, electrical and thermal couplings are accomplished.

Accordingly, the adapter of the invention is characterised in that the first part and second part are designed for being separately coupled with a first payload and a carrier rocket respectively, before being permanently coupled to each other. Comparison between the two parts shows that the first part is relatively light and the second part of the adapter is relatively heavy. The stress on the coupling between the first part of the adapter and the first payload is thus limited, while the relative heaviness of the second part provides the same with dimensions making it possible to place a second payload, which may be quite large.

An important difference with respect to the prior art is that the adapter is separable from both the first pay-load and the carrier rocket, so that the adapter as unit, that is to say the first part together with the second part, can function as independent spacecraft, casu quo as free flying satellite.

With regular missions in which the adapter according to the invention can be used and in which the carrier rocket reaches the correct orbit, the satellite can now first be uncoupled from the adapter by means of a separation mechanism provided for this purpose in the coupling between the satellite (the first payload) and the adapter. Subsequently, by means of a separation mechanism provided in the coupling between the adapter and the carrier rocket, the adapter as independent spacecraft can be uncoupled from the carrier rocket, allowing the same to continue its journey independently.

According to a further aspect of the invention, it is under certain conditions advantageous that in operation, the adapter is first separated from the carrier rocket while the coupling with the first payload (the satellite) remains intact. This is important if the desired orbit is not reached, for example, due to the carrier rocket not functioning properly. The adapter will then initially remain coupled with the first payload (the satellite) and the propulsion of the adapter can be used to carry out a recovery manoeuvre so that the desired satellite orbit can still be reached. At that moment the separation mechanism in the coupling between the adapter and the first payload can become active in order to uncouple the payload. The adapter can subsequently accomplish an own mission while the payload continues on its path in the satellite orbit that has meanwhile been reached.

In order to realise the possibilities outlined above, it is further desirable for propulsion means to be provided at least in the second part of the adapter, so as to allow a higher orbit to be reached in space.

Furthermore, especially this second part of the adapter is suitable for mounting the second payload.

For the propulsion means it is advantageous to use electrical propulsion means, such as an ion or plasma engine. It is also possible to use several such engines. This is technically well-tried and has the advantage of having a small volume and mass, leaving more space for the second payload.

It is further possible that at least a portion of the first payload extends into the first part of the adapter.

Another possibility is that a portion of the secondary payload extends into the carrier rocket. Ways to realise this include, for example, the insertion of one or several rings between the carrier rocket and the adapter. This makes it possible to considerably increase the space for such a secondary payload.

The invention is also embodied by the ready spacecraft, which comprises a carrier rocket as well as a payload, for example, in the form of a satellite, and an adapter for placing the payload on the carrier rocket, wherein the adapter complies with the features of the adapter according to the invention.

Finally, the invention relates to the use to which the adapter according to the invention can be put as independent space craft provided with preferably electrical propulsion means.

This use is preferably directed at the adapter being deployed as towing vehicle in space. An advantage of this application is that the carrier rocket has already taken the first payload (the satellite) and the adapter as coupled assembly into the same orbit. In the event of a deviation from the desired orbit, the propulsion means immediately enable the adapter to carry out the necessary orbital corrections. An adapter that is already separated from the first payload can also be recoupled with this load in order to carry out a correction with respect to the payload's orbit.

The invention will be further elucidated below by means of a non-limiting exemplary embodiment and with reference to the drawing. ,

The drawing shows in:
- Fig. 1 a schematic view of a spacecraft;
- Fig. 2 a schematic view of an adapter according to the invention, which is part of the spacecraft shown in Fig. 1;
- Fig. 3 a cut-away view of an adapter according to the invention, provided with a payload.

Similar parts in the figures are identified by the same reference numbers.

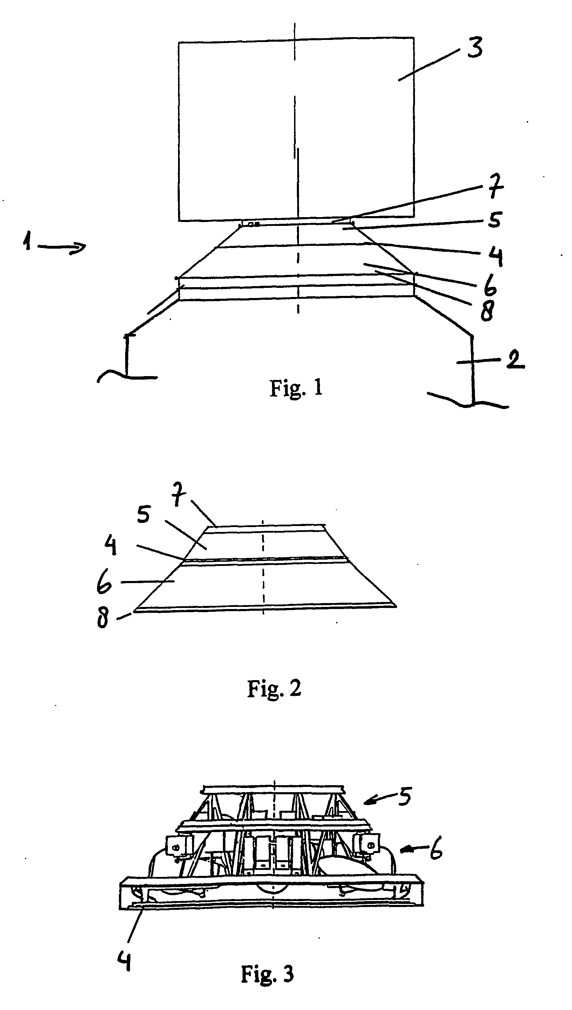

Referring first to Fig. 1 showing a spacecraft 1 according to the invention, having a carrier rocket 2 and a first payload 3 in the form of a satellite. The satellite 3 is placed on the carrier rocket 2 with the aid of an adapter 4 located between the carrier rocket 2 and the satellite 3. As clearly shown in the figure, the adapter 4 has, for example, a conical shape and is comprised of a first part 5 and a second part 6. In the ready state as shown, the first part 5 of the adapter 4 and the second part 6 of the adapter 4 are secured and permanently connected with each other by means of bolts or the like. Further, there is a separable coupling 7 which is well known to the person skilled in the art, between the satellite 3 and the first part 5 of the adapter 4. Such a separable coupling 8 is also used in the present invention between the second part 6 of the adapter 4 and the carrier rocket 2. After separation of the adapter 4 this coupling 8 remains on the carrier rocket 2.

The assembly of the spacecraft 1 proceeds in such a manner that a two-part adapter 4 is used, wherein prior to being coupled with the second part 6 of the adapter 4, the first relatively light part 5 of the adapter 4 is mounted under the satellite 3. Either at the same time, or before or afterward, the second relatively heavy part 6 of the adapter 4 is placed on the carrier rocket 2, after which the first part 5 of the adapter 4 together with the satellite 3 coupled therewith is placed on the second part of the adapter 4. After that, the first part 5 of the adapter 4 is secured to the second part 6 of the adapter 4, in order to bring the same into the ready and permanent form shown in Fig. 1. As mentioned above, securing occurs with bolts or other means known to the person skilled in the art. It is the intention that the connection between the first part 5 and the second part 6 of the adapter 4 remains in tact. Ergo, it is a connection whose separability in space is not intended or desired.

Fig. 2 shows a side-view of the adapter 4 according to the invention. The figure shows the first part of the adapter 4, and at the topside the separable coupling 7 for the connection with a payload. Further shown is the second part 6 of the adapter 4 with the separable coupling 8 placed at its underside, for connecting the adapter 4 with the carrier rocket.

Fig. 3 finally, shows a cut-away view of an adapter 4 comprising both payload and means enabling the adapter 4 to function as free-flying satellite. As shown, the second part 6 of the adapter 4 provides the necessary space for sizeable platform elements such as an own propulsion system for missions in higher orbits in space, allowing various payloads as well as energy supplies, computers and the like to be carried. The second part 6 of the adapter 4 provides space for fold-out solar panels secured to the underside, optionally provided with a device for permanently directing the panels toward the sun. The superfluous heat that is generated in the secondary payload can be discharged into space via external structural elements of the adapter 4, optionally using one or several fold-out radiators.

It is emphasised that the elucidation given in the foregoing example is to be interpreted as non-liming with respect to the appended claims without forming any restriction regarding the protective scope of said claims. For example, between the first part 5 and the second part 6 of the adapter 4 intermediate parts may be provided. This may afford advantages for increasing the power of the adapter 4 functioning as independent spacecraft. The increased power can be used, for example, for extra secondary payload and/or generation of energy and/or the discharge of heat in order to extend the range of space missions. Finally, it may be noted that during the launching stage the many projecting parts of the satellite to be launched into space as primary load 3, can be accommodated in the first part 5 of the adapter. The invention makes this possible, while nonetheless leaving ample accommodation possibilities in the second part 6 of the adapter 4 to equip the same with the necessary propulsion elements and secondary payload.

## Claims

1. A method of assembling a spacecraft (1), comprising a carrier rocket (2) and at least a first payload, (3) such as a satellite or the like, wherein the first payload is placed on the carrier rocket employing an adapter (4) between the carrier rocket (2) and the first payload (3), **characterised in that** a two-part adapter (4) is used, wherein a first relatively light part of the adapter (4) is mounted under the first payload (3), and a second relatively heavy part (6) of the adapter (4) is placed on the carrier rocket (2), after which the first part (5) of the adapter (4) together with the first payload (3) is placed on the second part (6) of the adapter (4), and the first part (5) of the adapter (4) is secured in a permanent connection on the second part (6) of the adapter (4) so as to bring the same into the completed form.

2. A method according to claim 1, **characterised in that** at least in the second part (6) of the adapter (4), propulsion means and/or a second payload is provided.

3. A method according to claim 1 or 2, **characterised in that** at least a portion of the first payload extends into the first part (5) of the adapter (4).

4. An adapter (4) for a spacecraft (1), comprising a first part (5) and a second part (6), wherein in the ready state, the first part (5) of the adapter (4) and the second part (6) of the adapter (4) are permanently connected **characterised in that** the first part (5) and second part (6) are designed for being separately coupled with a first payload and a carrier rocket (2) respectively, before being permanently coupled to each other.

5. An adapter(4) according to claim 4, **characterised in that** comparison shows that the first part (5) of the adapter (4) is relatively light and the second part (6) of the adapter (4) is relatively heavy.

6. An adapter (4) according to claim 4 or 5, **characterised in that** the same is separable from the first payload (3) and from the carrier rocket (2), and is equipped for carrying out an independent space flight.

7. An adapter (4) according to claim 6, **characterised in that** in operation, the same is first separated from the carrier rocket (2) while the coupling with the first payload (3) remains intact.

8. An adapter (4) according to claim 6 or 7, **characterised in that** the same is provided with propulsion means, preferably electrical propulsion means, such as one or more ion or plasma engines.

9. An adapter (4) according to one of the claims 4-8, **characterised in that** in the second part (6) of the adapter (4) the propulsion means and/or a second payload are mounted.

10. An adapter (4) according to one of the claims 4-8, **characterised in that** at least a portion of the first payload extends into the first part (5) of the adapter (4).

11. A spacecraft (1), comprising a carrier rocket (2), a payload (3) and an adapter (4) for placing the payload (3) on the carrier rocket (2), **characterised in that** the adapter (4) is of a type according to one of the claims 4-10.

12. The use of an adapter according to one of the claims 4-10 as independent space craft provided with, preferably, electrical propulsion means.

13. The use of the adapter according to claim 12, **characterised in that** the same is deployed as towing vehicle in space.

## Patentansprüche

1. Verfahren zum Bau eines Raumfahrzeuges (1), aufweisend eine Trägerrakete (2) und mindestens eine erste Nutzlast (3), wie etwa einen Satelliten oder ähnliches, wobei die erste Nutzlast auf der Trägerrakete platziert ist unter Anwendung eines Adapters (4) zwischen der Trägerrakete (2) und der ersten Nutzlast (3), **dadurch gekennzeichnet, dass** ein zweiteiliger Adapter (4) verwendet wird, wobei ein erster, verhältnismäßig leichter Teil des Adapters (4) unter der ersten Nutzlast (3) angebracht ist, und ein zweiter, verhältnismäßig schwerer Teil (6) des Adapters (4) auf der Trägerrakete (2) platziert ist, wobei im folgenden der erste Teil (5) des Adapters (4) zusammen mit der ersten Nutzlast (3) auf dem zweiten Teil (6) des Adapters (4) platziert wird, und der erste Teil (5) des Adapters (4) durch eine dauerhafte Verbindung auf dem zweiten Teil (6) des Adapters (4) befestigt wird, um diese in die fertige Anordnung zu bringen.

2. Verfahren gemäß Anspruch 1, **dadurch gekennzeichnet, dass** zumindest im zweiten Teil (6) des Adapters (4) Antriebseinrichtungen und/oder eine zweite Nutzlast vorgesehen sind.

3. Verfahren gemäß Anspruch 1 oder 2, **dadurch gekennzeichnet, dass** zumindest ein Teil der ersten Nutzlast in den ersten Teil (5) des Adapters (4) hinein ragt.

4. Adapter (4) für ein Raumfahrzeug (1), aufweisend einen ersten Teil (5) und einen zweiten Teil (6), wobei im fertigen Zustand der erste Teil (5) des Adapters (4) und der zweite Teil (6) des Adapters (4) dauerhaft miteinander verbunden sind, **dadurch gekennzeichnet, dass** der erste Teil (5) und der zweite Teil (6) so ausgeführt sind, dass diese zunächst getrennt mit einer ersten Nutzlast bzw. mit einer Trägerrakete (2) verbunden werden, bevor diese dauerhaft gegenseitig miteinander verbunden werden.

5. Adapter (4) gemäß Anspruch 4, **dadurch gekennzeichnet, dass** ein Vergleich zeigt, dass der erste Teil (5) des Adapters (4) verhältnismäßig leicht ist und der zweite Teil (6) des Adapters (4) verhältnismäßig schwer ist.

6. Adapter (4) gemäß Anspruch 4 oder 5, **dadurch gekennzeichnet, dass** dieser trennbar ist von der ersten Nutzlast (3) und von der Trägerrakete (2), und ausgerüstet ist, um einen eigenständigen Raumflug durchzuführen.

7. Adapter (4) gemäß Anspruch 6, **dadurch gekennzeichnet, dass** dieser im Betrieb zuerst von der Trägerrakete (2) getrennt wird, während die Verbindung mit der ersten Nutzlast (3) aufrecht erhalten bleibt.

8. Adapter (4) gemäß Anspruch 6 oder 7, **dadurch gekennzeichnet, dass** dieser ausgestattet ist mit Antriebseinrichtungen, vorzugsweise elektrischen Antriebseinrichtungen wie beispielsweise einem oder mehreren Ionen- oder Plasma-Antrieben.

9. Adapter (4) gemäß einem der Ansprüche 4-8, **dadurch gekennzeichnet, dass** in dem zweiten Teil (6) des Adapters (4) die Antriebseinrichtungen und/oder eine zweite Nutzlast angebracht sind.

10. Adapter (4) gemäß einem der Ansprüche 4-8, **dadurch gekennzeichnet, dass** mindestens ein Anteil der ersten Nutzlast in den ersten Teil (5) des Adapters (4) hinein ragt.

11. Raumfahrzeug (1), aufweisend eine Trägerrakete (2), eine Nutzlast (3) und einen Adapter (4) zur Platzierung der Nutzlast (3) auf der Trägerrakete (2), **dadurch gekennzeichnet, dass** der Adapter (4) von einer der Ausführungen gemäß der Ansprüche 4-10 ist.

12. Verwendung eines Adapters gemäß einem der Ansprüche 4-10 als eigenständiges Raumfahrzeug, vorzugsweise ausgestattet mit elektrischen Antriebseinrichtungen.

13. Verwendung des Adapters gemäß Anspruch 12, **dadurch gekennzeichnet, dass** dieser eingesetzt wird als Schleppfahrzeug im Weltraum.

## Revendications

1. Procédé d'assemblage d'un véhicule spatial (1), comprenant une fusée porteuse (2) et au moins une première charge utile (3), telle qu'un satellite ou autre charge semblable, dans lequel la première charge utile est placée sur la fusée porteuse en employant un adaptateur (4) entre la fusée porteuse (2) et la première charge utile (3), **caractérisé en ce qu'**un adaptateur en deux parties (4) est utilisé, dans lequel une première partie relativement légère de l'adaptateur (4) est montée sous la première charge utile (3), et une seconde partie relativement lourde (6) de l'adaptateur (4) est placée sur la fusée porteuse (2), après quoi la première partie (5) de l'adaptateur (4) en même temps que la première charge utile (3) est placée sur la seconde partie (6) de l'adaptateur (4), et la première partie (5) de l'adaptateur (4) est fixée en une connexion permanente sur la seconde partie (6) de l'adaptateur (4) de façon à emporter celui-ci sous forme achevée.

2. Procédé selon la revendication 1, **caractérisé en ce que** dans la seconde partie (6) de l'adaptateur (4) au moins, soient pourvus un moyen de propulsion et/ou une seconde charge utile.

3. Procédé selon la revendication 1 ou 2, **caractérisé en ce qu'**au moins une partie de la première charge utile s'étende dans la première partie (5) de l'adaptateur (4).

4. Adaptateur (4) pour véhicule spatial (1), comprenant une première partie (5) et une seconde partie (6), dans lequel, en état prêt, la première partie (5) de l'adaptateur (4) et la seconde partie (6) de l'adaptateur (4) sont connectées de manière permanente, **caractérisé en ce que** la première partie (5) et la seconde partie (6) sont conçues pour être couplées séparément avec une première charge utile et une fusée porteuse (2) respectivement, avant d'être couplées l'une avec l'autre de manière permanente.

5. Adaptateur (4) selon la revendication 4, **caractérisé en ce qu'**une comparaison montre que la première partie (5) de l'adaptateur (4) est relativement légère et que la seconde partie (6) de l'adaptateur (4) est relativement lourde.

6. Adaptateur (4) selon la revendication 4 ou 5, **caractérisé en ce que** celui-ci est séparable de la première charge utile (3) et de la fusée porteuse (2), et est équipé pour réaliser un vol spatial indépendant.

7. Adaptateur (4) selon la revendication 6, **caractérisé en ce qu'**en fonctionnement, celui-ci est d'abord séparé de la fusée porteuse (2) tandis que le couplage avec la première charge utile (3) demeure intact.

8. Adaptateur (4) selon la revendication 6 ou 7, **caractérisé en ce que** celui-ci est pourvu de moyens de propulsion, de préférence des moyens de propulsion électrique, tels qu'un ou plusieurs moteurs ioniques ou à plasma.

9. Adaptateur (4) selon l'une des revendications 4 à 8, **caractérisé en ce que** dans la seconde partie (6) de l'adaptateur (4) se trouvent montés les moyens de propulsion et/ou une seconde charge utile.

10. Adaptateur (4) selon l'une des revendications 4 à 8, **caractérisé en ce qu'**au moins une partie de la première charge utile s'étende dans la première partie (5) de l'adaptateur (4).

11. Véhicule spatial (1), comprenant une fusée porteuse (2), une charge utile (3), et un adaptateur (4) destiné à placer la charge utile (3) sur la fusée porteuse (2), **caractérisé en ce que** l'adaptateur (4) est du type selon l'une des revendications 4 à 10.

12. Utilisation d'un adaptateur selon l'une des revendications 4 à 10 en tant que véhicule spatial indépendant pourvu, de préférence, de moyens de propulsion électriques.

13. Utilisation de l'adaptateur selon la revendication 12, **caractérisé en ce que** celui-ci est déployé en tant que véhicule de remorquage dans l'espace.
